# DEMANDE DE BREVET EUROPEEN

(11) **EP 3 117 748 A1**
(43) Date de publication de la demande: **18.01.2017**
(21) Numéro de dépôt: 16179773.3
(22) Date de dépôt: 15.07.2016
(51) Int. Cl.: A47J 37/07

(54) **DISPOSITIF ET PROCÉDÉ POUR CUISINER DES PRODUITS ALIMENTAIRES**

(30) Priorité: 16.07.2015 FR 1556714
(71) Demandeur: Perrin, Philippe, 26150 Die (FR)
(72) Inventeur: Perrin, Philippe, 26150 Die (FR)
(74) Mandataire: Lavoix

(57) **Abrégé**

L'invention a pour objet un dispositif (1) pour cuisiner des produits alimentaires, comprenant une chambre de chauffage (19) de produits alimentaires, un bac de combustion (21) d'un combustible stocké en son sein, le bac de combustion présentant une ouverture supérieure (35) et étant disposé au-dessus de la chambre de chauffage, et une grille de support (37) de produits alimentaires, qui est rapportée sur l'ouverture supérieure. Selon l'invention, le dispositif (1) comprend en outre un compartiment de combustion (17) d'un combustible stocké en son sein, ce compartiment de combustion étant disposé sous la chambre de chauffage (19).

## Description

La présente invention concerne un dispositif pour cuisiner des produits alimentaires et un procédé pour cuisiner des produits alimentaires mis en oeuvre à l'aide d'un tel dispositif.

L'invention se rapporte au domaine des dispositifs de cuisson de table, et en particulier des barbecues de table mettant en oeuvre un combustible stocké au sein du barbecue, tel que du bois ou du charbon.

On connaît un barbecue de table comprenant une grille supérieure qui permet de faire cuire par exemple de la viande. Ce barbecue connu comprend également un foyer supportant la grille supérieure et produisant la chaleur nécessaire au chauffage d'aliments disposés sur cette dernière à partir de charbon de bois. Ce barbecue connu comprend en outre une grille inférieure, qui est disposée sous le foyer, de sorte qu'un poêlon peut être déposé sur cette grille inférieure et ainsi recevoir de la chaleur provenant du foyer par le dessus, ce qui permet par exemple de faire fondre ou gratiner le fromage contenu dans le poêlon.

En revanche, la chaleur communiquée au poêlon par le foyer peut se révéler insuffisante pour faire cuire certains types d'aliments, ou des aliments en quantité relativement importante, de sorte que ce barbecue connu manque de polyvalence.

US-B1-6 892 722 divulgue un appareil pour faire des grillades, qui inclut un grill comprenant une grille et un bac à charbon sur lequel la grille est montée, ainsi qu'un réceptacle pour l'évacuation de cendres. Le réceptacle est lui-même pourvu d'une grille autorisant l'introduction de cendres dans le réceptacle au travers de cette grille. Le grill est monté sur le réceptacle, de façon latérale, dans une position horizontale permettant la cuisson de produits alimentaires. Le grill peut être basculé jusqu'à une position inclinée, dans laquelle le charbon contenu dans le bac est versé dans le réceptacle au travers de la grille de ce dernier. Cependant, cet appareil connu permet seulement une cuisson de produits alimentaires par le dessous, lorsque le grill est à l'horizontal. Lorsque le grill est basculé, la cuisson de produits alimentaires sur la grille est impossible, du fait de l'inclinaison de cette dernière. Le charbon tombant alors au travers de la grille du réceptacle, on ne pourrait pas déposer des produits alimentaires sur cette dernière.

US-B1-3 683 791 divulgue un appareil pour griller ou fumer des produits alimentaires. Cet appareil comprend, de bas en haut, une paroi inférieure pourvue d'ouvertures de ventilation, des grilles inférieures délimitant le bas d'une chambre de combustion, des grilles supérieures de cuisson délimitant le haut de la chambre de combustion et sur lesquelles des produits alimentaires peuvent être déposés, ainsi qu'un capot supérieur amovible pourvu d'ouvertures de ventilation. Cependant, la grille de cuisson de cet appareil ne permet qu'une cuisson par le dessous.

En conséquence, l'invention se propose de remédier aux inconvénients mentionnés ci-dessus, et propose un nouveau dispositif pour cuisiner des produits alimentaires qui est à la fois plus efficace et plus polyvalent.

L'invention a pour objet un dispositif selon la revendication 1.

Grâce à l'invention, le compartiment de combustion, qui peut être activé indépendamment du bac de combustion, apporte une chaleur complémentaire à celle du bac de combustion. Le compartiment de combustion chauffe ainsi la chambre de chauffage des produits alimentaires par le dessous, ce qui permet un chauffage plus efficace et une meilleure cuisson des produits alimentaires en question.

D'autres caractéristiques avantageuses de l'invention sont définies dans les revendications 2 à 9.

L'invention a également pour objet procédé pour cuisiner des produits alimentaires défini dans la revendication 10.

D'autres caractéristiques avantageuses de l'invention sont définies dans la revendication 11.

L'invention sera mieux comprise à la lecture de la description qui va suivre, donnée uniquement à titre d'exemple non limitatif et non exhaustif et faite en se référant aux dessins dans lesquels :
- la figure 1 est une vue en perspective d'un dispositif pour cuisiner conforme à l'invention ;
- la figure 2 est une vue en perspective éclatée du dispositif de la figure 1 ; et
- la figure 3 est une coupe transversale du dispositif des figures 1 et 2, selon une ligne de coupe III-III visible à la figure 1.

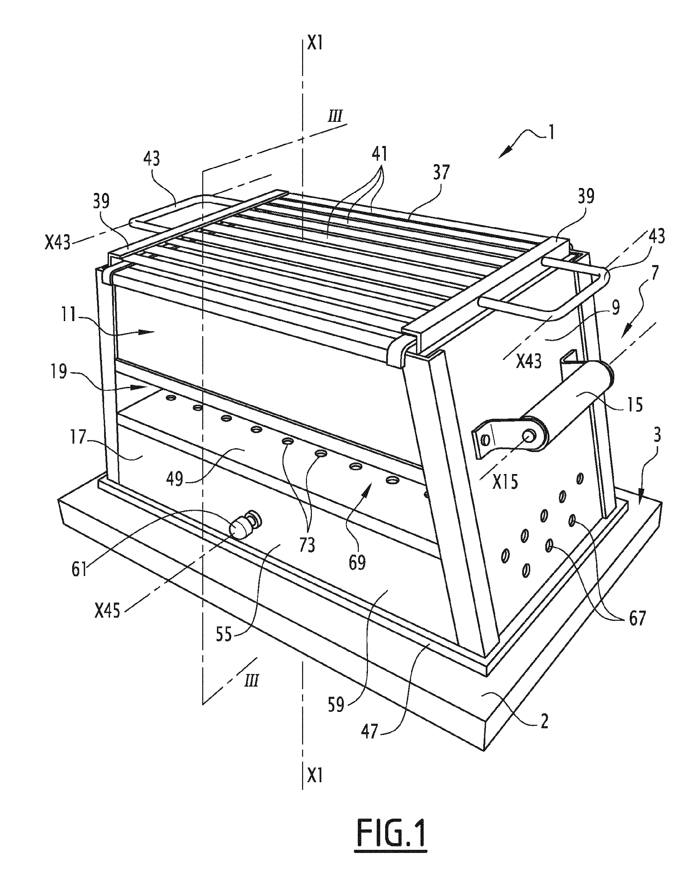

Le dispositif 1 représenté aux figures 1 à 3 permet de cuisiner des produits alimentaires, c'est-à-dire de les chauffer, de les cuire, de les faire gratiner ou autre. Le dispositif 1 comprend un socle 2, lequel forme une plaque sensiblement plane et présente une face supérieure 3 sur laquelle un châssis 7 du dispositif 1 est monté. Le socle 2 présente également une face inférieure 5 opposée à la face supérieure 3, le dispositif 1 étant destiné à reposer par l'intermédiaire de cette face 5 sur une surface d'appui, préférentiellement horizontale, non représentée, qui peut être formée par exemple par le plan d'une table, d'un meuble, ou par le sol. En pratique, le socle 2 forme une planche dont l'épaisseur séparant la face supérieure 3 et la face inférieure 5 est suffisante pour rendre le socle 2 thermo-isolant. Le caractère thermo-isolant du socle 2 est également obtenu grâce au matériau dans lequel le socle 2 est réalisé et qui est préférentiellement du bois.

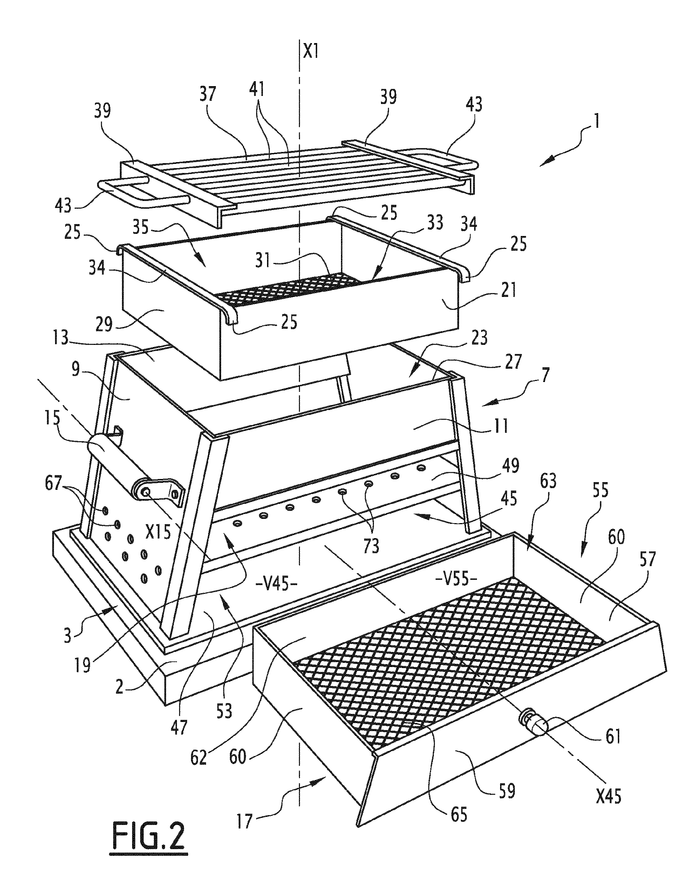

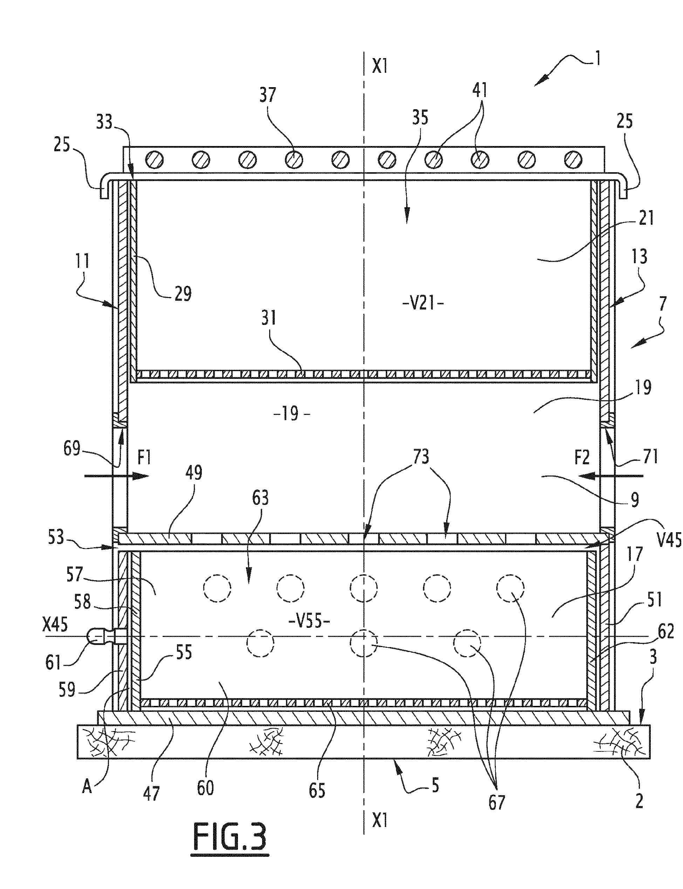

Le socle 2 définit un axe principal X1 du dispositif 1, lequel axe X1 est orthogonal à un plan dans lequel s'étend le socle 2. L'axe X1 est vertical lorsque le socle 2 repose sur une surface horizontale. Par commodité, la suite de la description est orientée par rapport à l'axe principal X1, en considérant que les termes « supérieur » et « haut » correspondent à une direction axiale tournée vers la partie haute des figures 1 à 3, tandis que les termes « inférieur » et « bas » correspondent à une direction de sens opposée. L'avant du dispositif 1 est sa partie visible aux figures 1 et 2 et sur la gauche de la figure 3, alors que l'arrière du dispositif 1 est visible sur la droite de la figure 3.

Le châssis 7, qui est au moins majoritairement réalisé en métal, présente avantageusement une forme générale de pavé dont deux faces opposées verticales présentent la forme d'un trapèze. En variante, le châssis 7 présente une forme de pavé droit, une forme cylindrique, une forme de tronc de pyramide ou toute autre forme susceptible de conférer au dispositif 1 un aspect esthétique.

Dans l'exemple illustré aux figures, le châssis 7 comprend deux parois latérales 9 qui s'élèvent à partir de la face supérieure 3 du socle 2 à distance l'une de l'autre, les parois latérales 9 étant inclinées de manière à converger vers le haut en direction de l'axe principal X1. Le châssis 7 présente est ainsi plus large au niveau du socle 2 qu'au niveau de sa partie supérieure. Les parois latérales 9 sont reliées entre elles par une paroi avant 11 et une paroi arrière haute 13 du châssis 7 qui sont parallèles entre elle et à l'axe X1. La paroi avant 11 et la paroi arrière haute 13 sont de forme similaire et en particulier trapézoïdale. Elles sont disposées à la même hauteur sur le châssis 7, à l'opposé du socle 2, en regard l'une de l'autre. Les parois latérales 9 sont également reliées entre elles par une paroi arrière basse 51 qui s'étend sensiblement dans le même plan vertical que la paroi arrière haute 13, à distance de cette dernière, en s'élevant à partir du socle 2, ou pour le moins à proximité de ce dernier. Les parois 9, 11, 13 et 51 forment, au moins en partie, une enveloppe extérieure du châssis 7, et sont avantageusement assemblées entre elles par soudage.

Les parois latérales 9 sont optionnellement dotées de poignées de préhension 15. Tel que visible aux figures 1 et 2, ces dernières font saillie en surface des parois latérales 9 vers l'extérieur du châssis 7, et sont en l'espèce vissées, rivetées ou soudées sur les parois latérales 9. Les poignées s'étendent chacune selon un axe de préhension X15 qui est orthogonal à l'axe X1.

Le dispositif 1 comprend, répartis successivement de bas en haut le long de l'axe X1, un compartiment de combustion 17 monté sur la face supérieure 3 du socle 2, une chambre de chauffage 19 disposée juste au-dessus du compartiment de combustion 17 et un bac de combustion 21 disposé au sommet du châssis 7, juste au-dessus de la chambre de chauffage 19. La chambre de chauffage 19 appartient au châssis 7 et est disposée entre les parois latérales 9, la paroi avant 11 et la paroi arrière haute 13. De même, le compartiment de combustion 17 appartient au châssis 7 et est disposé entre les parois latérales 9 et la paroi arrière basse 51. Le bac de combustion 21, quant à lui, tel qu'illustré à la figure 2, forme avantageusement un élément indépendant du châssis 7 et qui est conçu pour être rapporté sur ce dernier, également entre les parois latérales 9.

En l'espèce, les parois latérales 9, la paroi avant 11 et la paroi arrière haute 13 forment en partie supérieure du châssis 7, une ouverture supérieure 23, qui débouche vers le haut, qui est de forme générale rectangulaire et au sein de laquelle le bac de combustion 21 peut être monté. On note 27 le bord de l'ouverture 23.

Comme visible à la figure 2, le bac de combustion 21 comprend une paroi périphérique 29 et un fond de bac 31 de forme rectangulaire, disposé vers le bas de la paroi périphérique 29. Le fond 31 est, de façon avantageuse, constitué par une grille. Les éléments 29 et 31 délimitent ensemble un volume V21 parallélépipédique de réception d'un combustible destiné à être stocké au sein du bac de combustion 21. La paroi périphérique 29 forme un cadre, incluant quatre faces disposées en rectangle et connectées les unes aux autres par leurs extrémités. La paroi périphérique 29 fait ainsi saillie depuis le contour du fond de bac 31 jusqu'à un bord supérieur 33 qui définit une ouverture supérieure 35 du bac 21, ouverte vers le haut. Le bord supérieur 33 forme des arêtes parallèles deux à deux, dont deux arêtes latérales 34 parallèles entre elles, qui se terminent à leurs extrémités par des crochets 25. Ainsi, le bac 21 comprend quatre crochets 25 par l'intermédiaire desquels il est accroché sur le bord 27 de l'ouverture 23. Les crochets 25 sont répartis aux quatre coins de la forme rectangulaire de l'ouverture 35.

Lorsque le bac 21 est monté sur le châssis 7, le fond de bac 31 est positionné parallèlement au socle 2 et forme une grille qui met en communication le volume intérieur V21 du bac de combustion avec l'intérieur de la chambre de chauffage 19 qui se trouve alors juste au-dessous du fond 31. Le fond de bac 31 forme alors une paroi supérieure délimitant le dessus de la chambre de chauffage 19.

Le fond de bac 31 formant une grille, le combustible placé en son sein est aéré de manière à pouvoir être mis en combustion au sein du bac 21, notamment lorsque ce dernier est monté au sein de l'ouverture supérieure 23 du châssis 7. La chaleur ainsi produite par le combustible est diffusée d'une part vers le haut du bac de combustion 21 au travers de l'ouverture supérieure 35 et d'autre part vers le bas au travers du fond de bac 21 afin de chauffer la chambre de chauffage 19 placée au-dessous. Les parois 9 étant obliques, lorsque le bac 21 est monté sur le châssis 7, une lame d'air est interposée entre la paroi 29 et les parois 9, afin d'isoler sensiblement les poignées 15 de la chaleur du bac 21. Cet espace permet également d'améliorer l'aération du combustible placé au sein du bac 21.

Le combustible est préférentiellement un combustible solide du genre bois, ou charbon. De préférence, le combustible est du charbon de bois ou du charbon de bambou lequel présente l'avantage de générer peu, voire pas, de fumée, ce qui permet une utilisation du dispositif 1 en intérieur.

Le dispositif 1 comprend également une grille de support 37 de produits alimentaires, laquelle est destinée à supporter des produits alimentaires à cuisiner avec le dispositif 1, sous la chaleur produite par le combustible du bas 21. Tel qu'illustré aux figures 1 et 2, la grille 37 est rapportée sur l'ouverture supérieure 35, de façon amovible. La grille de support 37 se trouve ainsi placé au-dessus du bac de combustion 21 de sorte qu'elle reçoit la chaleur émise par la combustion du combustible, à travers l'ouverture supérieure 35. En pratique, la grille de support 37 comprend deux longerons extrémaux 39 par l'intermédiaire desquels la grille 37 est positionnée en appui contre le bord supérieur 33 du bac 21. Lorsque la grille 37 repose sur le bac 21, les longerons extrémaux 39 s'étendent à l'horizontal parallèlement au socle 2 et le long des deux arêtes latérales 34 du bord supérieur 33. La grille de support 37 comprend également des barreaux transversaux 41, qui sont par exemple de sections circulaires telles que cela est visible à la figure 3. Les barreaux transversaux 41 relient les deux longerons extrémaux 39 l'un à l'autre et s'étendent dans un plan défini par les longerons extrémaux 39. Les barreaux transversaux 41 sont ainsi parallèles au socle 2 lorsque la grille 37 est rapportée sur l'ouverture supérieure 35. Enfin, les barreaux 41 sont perpendiculaires aux longerons extrémaux 39, parallèles entre eux et espacés, de manière à ce que la chaleur provenant du bac 21 soit transmise aux produits alimentaires placés sur la grille 37. De façon optionnelle, la grille 37 est pourvue de deux poignées qui sont chacune solidaire de l'un des longerons extrémaux 39, par exemple par soudure de chaque poignée 43 sur son longeron extrémal 39 associé, les poignées 43 s'étendant dans le plan défini par les barreaux transversaux 41 et les longerons extrémaux 39, de sorte que les poignées 43 s'étendent à l'opposé et à l'écart des barreaux transversaux 41. Les poignées 43 s'étendent chacune selon un axe X43 parallèle aux longerons 39 et parallèle aux axes X15 lorsque la grille 37 repose sur le châssis 7.

Le compartiment de combustion 17 comprend un logement 45, qui est bien visible à la figure 2. Le logement 45 délimite un volume intérieur V45 qui est délimité latéralement par les parois latérales 9, en dessous par une plaque inférieure 47, laquelle est fixée en appui plan contre la face supérieure 3 du socle 2 par exemple par rivetage, soudage ou vissage. La plaque inférieure 47 relie les parois latérales 9 entre elles et appartient au châssis 7, qui est en l'espèce fixé au socle 2 via la paroi inférieure 47. Le volume intérieur V45 du logement 45 est également délimité par une plaque de support 49 qui s'étend parallèlement et à distance de la plaque inférieure 47 et qui relie les parois latérales 9 entre elles. La plaque de support 49 appartient également au châssis 7. Enfin, le volume intérieur du logement 45 est fermé à l'arrière par la paroi arrière basse 51 du châssis 7, qui relie en l'espèce la plaque inférieure 47, la plaque de support 49 et les parois latérales 9. Le logement 45 présente, à l'avant, une ouverture frontale 53 qui est délimitée par les parois latérales 9, la plaque de support 49 et la plaque inférieure 47. L'ouverture frontale 53 présente ainsi une forme trapézoïdale et met en communication l'intérieur du logement 45 avec l'extérieur du dispositif 1.

Le compartiment de combustion 17 comprend également un tiroir de combustion 55 qui est visible en entier à la figure 2. Un combustible, de même nature ou de nature différente que le combustible du bac de combustion 21, est stocké et brûlé au sein du tiroir de combustion 55 pour chauffer la chambre de chauffage 19 placée juste au-dessus, à travers la plaque de support 49. Le tiroir de combustion 55 est monté coulissant dans le logement 45 selon un axe de coulissement X45 et parallèle aux parois latérales 9. En l'espèce, le tiroir de combustion 55 est monté dans le logement 45 par l'intermédiaire de l'ouverture frontale 53, de sorte qu'il peut être complètement désolidarisé et retiré du châssis 7 par l'intermédiaire de cette ouverture 53, notamment pour le nettoyer. Le tiroir 55 comprend une façade avant 59 de forme trapézoïdale, ou pour le moins d'une forme complémentaire avec celle de l'ouverture centrale 53. La façade 59 est pourvue d'une poignée 61 de manipulation du tiroir 55 depuis une position ouverte, dans laquelle le tiroir 55 peut être alimenté en combustible, jusqu'à une position fermée dans laquelle la façade 59 obstrue sensiblement l'ouverture frontale 53, tel qu'illustré aux figures 1 et 3. Dans cette position fermée, le tiroir 55 est entièrement inclus dans le logement 45. Dans la position ouverte, au contraire, le tiroir 55 est partiellement ou totalement à l'extérieur du logement 45, tel qu'illustré à la figure 2.

Par ailleurs, le tiroir 55 comprend une paroi d'enceinte 57 qui délimite une ouverture supérieure 63 par l'intermédiaire de laquelle le combustible peut être introduit au sein d'un volume de réception V55 du tiroir 55 délimité par la paroi d'enceinte 57. On comprend que le combustible peut ainsi être introduit dans le tiroir 55 par l'intermédiaire de l'ouverture 63 lorsque le tiroir est en position ouverte. La façade 59 est fixée sur la paroi d'enceinte 57, et en particulier à une face avant 58 de la paroi 57, à distance de cette dernière. De cette façon, une lame d'air A visible à la figure 3 est ménagée entre la façade 59 et la face avant 58 qui s'étendent parallèlement l'une par rapport à l'autre. La présence de la lame d'air A permet d'isoler la façade 59 de la chaleur produite par le combustible brûlant à l'intérieur du tiroir 55. Ainsi, la paroi d'enceinte 57 comprend la face avant 58, deux faces latérales 60 et une face arrière 62 qui forment ensemble la paroi d'enceinte 57, laquelle est rectangulaire. Le tiroir de combustion 55 comprend en outre en un fond 65 qui délimite le volume de réception du tiroir 55 par le bas et relie les quatre faces de la paroi d'enceinte 57. Lorsque le tiroir 55 est en position fermée, le fond 65 s'étend avantageusement parallèlement à, et à distance de, la plaque inférieure 47. Le fond 65 forme une grille similaire au fond de bac 31. De manière générale, la paroi périphérique 29 du bac 21 et le fond de bac 31 sont respectivement similaires en forme et en structure à la paroi d'enceinte 57 et au fond 65 du tiroir 55. Le fond 65 formant une grille, le combustible est ainsi aéré.

De préférence, le compartiment de combustion 17 présente une pluralité d'orifices d'aération 67, qui sont ménagés au travers des parois latérales 9, pour alimenter le combustible stocké au sein du tiroir 55 avec de l'air provenant de l'extérieur du dispositif 1. De préférence, les faces latérales 60 du tiroir 55 s'étendent dans un plan qui est orthogonal avec le fond 55, de sorte que les parois latérales 9 sont inclinées par rapport aux faces latérales 60 lorsque le tiroir 55 est en position fermée. Un espace d'aération est ainsi ménagé entre les faces latérales 60 et les parois latérales 9. Cet espace d'aération permet également d'isoler les parois latérales 9 de la chaleur du combustible contenu dans le tiroir 55.

La chambre de chauffage 19 est délimitée en bas par la plaque de support 49 et latéralement par les parois latérales 9. La chambre de chauffage 19 forme ainsi un tunnel traversant le dispositif 1 de part en part depuis une ouverture avant ou frontale 69 débouchant entre la paroi avant 11 et l'ouverture frontale 53, et une ouverture arrière ou dorsale 71 débouchant à l'opposé du dispositif 1, entre les parois 13 et 51 tel que cela est visible à la figure 3. Les ouvertures frontale 69 et dorsale 71 sont ainsi de forme trapézoïdale. La plaque de support 49 comprend avantageusement une pluralité d'orifices de transmission 73 qui sont ménagés au travers de la plaque de support 49. La plaque de support est donc également en forme de grille ajourée, quoiqu'ayant une structure différente des fonds 31 et 65. Les orifices 73 mettent ainsi en communication l'intérieur de la chambre 19 avec l'intérieur du tiroir 55 du compartiment de combustion 17 disposé juste en dessous, de manière à transmettre la chaleur depuis le tiroir 55 jusqu'à la chambre 19 et à aérer le combustible. Un poêlon non représenté contenant des produits alimentaires à cuisiner peut ainsi être introduit par l'intermédiaire de l'ouverture frontale 69 ou dorsale 71 au sein de la chambre 19, comme représenté par les flèches F1 et F2 à la figure 3, et déposé sur la plaque de support 49. Alternativement, les produits alimentaires peuvent être déposés directement sur la plaque de support 49. Les aliments ainsi placés dans la chambre de chauffage 19 sont chauffés :
- par le haut, par le combustible contenu dans le bac 21, et/ou
- par le bas, par le combustible contenu dans compartiment 7.

Le dispositif 1 est ainsi particulièrement polyvalent et s'adapte en l'espèce à de nombreux modes de préparation de différents types d'aliments.

Grâce au dispositif 1, on met en oeuvre un procédé pour cuisiner des produits alimentaires, dans lequel on chauffe la chambre de chauffage 19 par combustion de combustible au sein du bac de combustion 21 situé au-dessus de celle-ci. On chauffe également la chambre de chauffage 19 par le dessous, par combustion de combustible au sein du compartiment de combustion 17. Cela permet un chauffage plus efficace et une meilleure cuisson des produits alimentaires contenus dans la chambre de chauffage 19.

De plus, la combustion du combustible reçu au sein du bac de combustion 21 permet de chauffer des produits alimentaires supportés sur la grille de support 37. On peut ainsi cuisiner simultanément les produits alimentaires supportés sur la grille de support 37 et contenus dans la chambre de chauffage 19.

Les différents modes de réalisation et variantes décrits ci-dessus peuvent être combinés pour réaliser de nouveaux modes de réalisation sans sortir du cadre de l'invention définie dans les revendications.

## Revendications

1. Dispositif (1) pour cuisiner des produits alimentaires, comprenant :
- une chambre de chauffage (19) de produits alimentaires,
- un bac de combustion (21) d'un combustible stocké en son sein, le bac de combustion présentant une ouverture supérieure (35) et étant disposé au-dessus de la chambre de chauffage, et
- une grille de support (37) de produits alimentaires, qui est rapportée sur l'ouverture supérieure,
le dispositif (1) étant **caractérisé en ce qu'**il comprend en outre un compartiment de combustion (17) d'un combustible stocké en son sein, ce compartiment de combustion étant disposé sous la chambre de chauffage (19).

2. Dispositif (1) selon la revendication 1, **caractérisé en ce que** :
- le compartiment de combustion (17) comprend :
o un logement (45), qui présente une ouverture frontale (53), et
o un tiroir de combustion (55), au sein duquel le combustible est stocké et brûlé, le tiroir de combustion comportant une façade (59),
- le tiroir de combustion est monté coulissant dans le logement par l'intermédiaire de l'ouverture frontale (53), depuis une position ouverte, dans laquelle le tiroir de combustion peut être alimenté en combustible, jusqu'à une position fermée, dans laquelle la façade (59) obstrue sensiblement l'ouverture frontale.

3. Dispositif (1) selon la revendication 2, **caractérisé en ce que** le tiroir de combustion (55) comprend une paroi d'enceinte (57) délimitant un volume (V55) de réception du combustible et **en ce que** la façade (59) est fixée sur la paroi d'enceinte, à distance de cette dernière, de manière à ménager une lame d'air (A) entre la façade et la paroi d'enceinte.

4. Dispositif (1) selon la revendication 3, **caractérisé en ce que** le tiroir de combustion (55) comprend un fond (65) qui délimite le volume (V55) de réception du combustible et qui forme une grille.

5. Dispositif (1) selon l'une quelconque des revendications précédentes, **caractérisé en ce que** le compartiment de combustion (17) présente au moins un orifice d'aération (67) pour alimenter le combustible stocké en son sein avec de l'air provenant de l'extérieur du dispositif.

6. Dispositif (1) selon l'une quelconque des revendications précédentes, **caractérisé en ce qu'**il comprend deux parois latérales (9) entre lesquelles sont disposés de bas en haut le compartiment de combustion (17), la chambre de chauffage (19) et le bac de combustion (21), les parois latérales étant inclinées de manière à converger vers le haut.

7. Dispositif (1) selon l'une quelconque des revendications précédentes, **caractérisé en ce que** la chambre de chauffage (19) comprend une plaque de support (49) des produits alimentaires, au moins un orifice de transmission (73) de chaleur étant ménagé au travers de la plaque de support, l'orifice de transmission mettant en communication l'intérieur de la chambre de chauffage avec l'intérieur du compartiment de combustion (17).

8. Dispositif (1) selon l'une quelconque des revendications précédentes, **caractérisé en ce que** le bac de combustion (21) comprend un fond de bac (31) formant une grille mettant en communication l'intérieur du bac de combustion avec l'intérieur de la chambre de chauffage (19).

9. Dispositif (1) selon l'une quelconque des revendications précédentes, **caractérisé en ce qu'**il comprend un socle (2) thermo-isolant présentant une face supérieure (3) sur laquelle le compartiment de combustion (17) est monté, et une face inférieure (5) par l'intermédiaire de laquelle le dispositif est destiné à reposer sur une surface d'appui.

10. Procédé pour cuisiner des produits alimentaires à l'aide d'un dispositif (1) conforme à l'une quelconque des revendications précédentes, ce procédé comprenant au moins des étapes de :
- chauffage de la chambre de chauffage (19) par le dessus, par combustion de combustible au sein bac de combustion (21), et
- chauffage complémentaire de la chambre de chauffage (19) par le dessous, par combustion de combustible au sein du compartiment de combustion (17).

11. Procédé de cuisson selon la revendication 10, le procédé comprenant en outre au moins une étape de chauffage de produits alimentaires supportés sur la grille de support (37) par combustion du combustible reçu au sein du bac de combustion (21).
